(19)

Europäisches
Patentamt
European
Patent Office
Office européen
des brevets

(11) **EP 1 317 825 B1**

(12) **EUROPEAN PATENT SPECIFICATION**

(45) Date of publication and mention
of the grant of the patent:
**06.08.2008 Bulletin 2008/32**

(51) Int Cl.:
*H04L 12/56* (2006.01)     *H04L 12/18* (2006.01)

(21) Application number: **01976198.0**

(22) Date of filing: **06.09.2001**

(86) International application number:
**PCT/EP2001/010281**

(87) International publication number:
**WO 2002/023816 (21.03.2002 Gazette 2002/12)**

(54) **SYSTEM AND METHOD FOR CONTROLLING THE MULTICAST TRAFFIC OF A DATA PACKET SWITCH**

SYSTEM UND VERFAHREN ZUR STEUERUNG DES MEHRFACHDATENVERKEHRS EINER DATENVERMITTLUNGSSTELLE

Système et procédé de régulation du trafic multidiffusion d'un commutateur des paquets de données

(84) Designated Contracting States:
**AT BE CH CY DE DK ES FI FR GB GR IE IT LI LU MC NL PT SE TR**

(30) Priority: **12.09.2000 EP 00480084**

(43) Date of publication of application:
**11.06.2003 Bulletin 2003/24**

(73) Proprietors:
• **International Business Machines Corporation Armonk, NY 10504 (US)**
Designated Contracting States:
**AT BE CH CY DE DK ES FI FR GB GR IE IT LI LU NL PT SE TR**
• **IBM FRANCE**
**92066 paris la Défense Cedex (FR)**
Designated Contracting States:
**MC**

(72) Inventors:
• **WIND, Daniel**
**F-06340 Drap (FR)**
• **ROMAN, Thierry**
**F-06100 Nice (FR)**
• **BLANC, Alain**
**F-06140 Tourrettes sur Loup (FR)**
• **BREZZO, Bernard**
**F-06100 Nice (FR)**
• **GALLEZOT, René**
**F-06480 La Colle sur Loup (FR)**

• **LE MAUT, François**
**F-06200 Nice (FR)**

(74) Representative: **Therias, Philippe et al Compagnie IBM France Département de Propriété Intellectuelle Le Plan-du-Bois 06610 La Gaude (FR)**

(56) References cited:
**EP-A- 0 778 686          EP-A- 0 948 169 US-A- 5 410 540**

• **CHIUSSI F M ET AL: "PERFORMANCE OF SHARED-MEMORY SWITCHES UNDER MULTICAST BURSTY TRAFFIC" IEEE JOURNAL ON SELECTED AREAS IN COMMUNICATIONS, IEEE INC. NEW YORK, US, vol. 15, no. 3, 1 April 1997 (1997-04-01), pages 473-486, XP000683942 ISSN: 0733-8716**
• **HASHEMI M R ET AL: "A multicast single-queue switch with a novel copy mechanism" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA, IEEE, US, 29 March 1998 (1998-03-29), pages 800-807, XP010270441 ISBN: 0-7803-4383-2**

## Description

## Field of the Invention

The present invention broadly relates to communications networks. It is more particularly concerned with a system and method for controlling multicast and broadcast traffic of packet switches used at data network exchange nodes. The invention is aimed at preventing all sorts of traffic disorders that would result if a too high level of multicast and broadcast traffic was authorized.

## Background of the Invention

In past years a continued growth in demand for bandwidth over communications networks has fueled the deployment of telecommunication lines made of fiber optics. Also, to even better exploit the intrinsic huge bandwidth capacity of those optical fibers, a widespread use of WDM (Wavelength Division Multiplexing) systems has been observed. Thus, the bottleneck to carrying more and more data in large communications networks is no longer, as it used to be, in the links but is rather at the exchange nodes. Although different protocols for transporting data are indeed in use such as ATM (Asynchronous Transfer Mode), Frame Relay and IP (Internet Protocol), the actual implementation of network nodes, capable of handling aggregate data traffic in the range of hundredths of gigabits per second or even in terabits per second rests mainly, nowadays, on switching techniques especially, making use of high-performance packet switch devices. If many different approaches are in theory possible to carry out switching at network nodes, a popular solution is to employ, irrespective of the higher communications protocols actually in use to link the end-users, such as the ones mentioned here above, fixed-size packet (also referred to as cell) switching devices. Those devices are more easily tunable for performance than other solutions especially, those handling variable-length packets often built over a ring or a bus architecture. Thus, NxN switches, which can be viewed as black boxes with N inputs and N outputs are made capable of moving fixed-size packets from any incoming link to any outgoing link. An incoming link is connected to a switch fabric through an input port however indirectly. In practice, there is always a port to line adapter between the physical incoming link e.g., a fiber optical connection, and the actual switch fabric input port in order to adapt the generally complex physical protocol e.g., SONET (Synchronous Optical NETwork standard) and often, some of the higher communications protocols in use between switching nodes too so as to take into account the fact that switches are tailored to handle fixed-size packets and are not able to move directly the variable length packets of many protocols. Conversely, the interface between the switch fabric and the outgoing link is referred to as the output port and there is also an output adapter.

Hence, if switches have indeed permitted to accommodate the huge increase of bandwidth resulting of the deployment of optical fibers it remains that those devices are intrinsically made to establish point-to-point communications thus, their architecture is best suited when linking one incoming link to one outgoing link. On the contrary of a shared-medium architecture e.g., a ring or a bus, which naturally supports multicast or broadcast (since each adapter connected on the shared medium 'sees' anyway all the traffic of the shared medium) carrying out those network mandatory functions in a switch is not straightforward. It requires that, in one way or another, packets entering through an input port be replicated over some (multicast) of the output ports or all (broadcast) of them. Because, in order to save internal memory, packets are not actually replicated the management of the multicast and broadcast becomes complex. More importantly, it tends to consume other switch resources especially, the invaluable switch internal bandwidth, at the expense of the unicast traffic thus, may significantly contribute to aggravate or create traffic congestion. As an example of the added complexity, for each multicast flow, a list of output ports, through which a same packet has to be sent through, must be maintained and the single copy of a packet to be replicated cannot thus be released till the last port of the list has been served. Then, if the use of switches, in particular fixed-packet switches, have proved to be a viable solution to implement terabit switching functions while shared-medium solutions, based on rings or busses, have failed to cope with the huge demand for bandwidth accompanying the deployment of optical fibers this has been at the expense of having to implement, in switches, sophisticated mechanisms to effectively being able to support broadcast and multicast using a device whose architecture does not fit well with these mandatory operations and which tend, this is a much more serious concern, to quickly create traffic congestion if not properly controlled.

A publication by Chiussi F M et al compares the performace of various shared-memory switch systems under multicast bursty traffic, published in IEEE Journal on selected areas in communications, IEEE inc. New York, US, vol 15, no. 3, 1st April 1997, pages 473-486, XP000683942 ISSN: 0733-8716, but does not solve the above stated problem.

European patent application EP-A-0948 169, filed by Nortel Networks Corporation, discloses a method and a system for port memory multicast cell tracking in common memory switches for use in an asychroneous transfer mode network, but does not the above stated problem.

## Object of the Invention

Thus, it is a broad object of the invention to help preventing traffic congestion to occur in communications network as a result of the multicast and broadcast traffic to be supported in the network nodes.

It is a more particular object of the invention to provide a method and system aimed at controlling the level of multicast and broadcast traffic to be handled in a fixed-size packet switch.

It is still another object of the invention to define a simple metric to estimate the overall level of multicast and broadcast traffic handled at any given instant in a fixed-size packet switch.

It is yet another object of the invention to allow a better utilization of a switch internal resources.

Further objects, features and advantages of the present invention will become apparent to the ones skilled in the art upon examination of the following description in reference to the accompanying drawings. It is intended that any additional advantages be incorporated herein.

## Summary of the Invention

A method and a system for assessing a level of multicast traffic in a data switch are disclosed. The invention applies to data switches aimed at steering fixed-size data packets from input ports to output ports and comprising a shared memory for temporarily holding a single copy of the fixed-size data packets. The shared-memory is comprised of buffers for storing the fixed-size data packets. The output ports are each equipped with an output port queue which contains pointers to those of the buffers holding the data packets due to leave the data switch through the output port. Then, the invention assumes that total number of shared-memory buffers currently holding a data packet, due to leave the data switch, is counted. Also counted, over all output port queues, is the total number of pointers to the buffers. Hence, by comparing the two numbers a metric of the level of multicast traffic is derived resulting in the calculation of a MultiCast Index (MCI). The invention further assumes that data switch is used together with a Switch Core Adaptation Layer (SCAL) which includes a multicast input queue to hold the incoming traffic destined for more than one output port. Traffic is handled by data switch and SCAL on the basis of a set of traffic priority classes. Thus, a multicast threshold MCT(P) associated to the multicast input queue, per priority, is set or updated. While receiving incoming data traffic MCI is kept calculated and, for each priority class (P), in each SCAL [150], MCI is compared to MCT(P) to determine whether it is larger or not. If larger, SCAL is instructed to hold, in the multicast input queue, the incoming traffic for that priority plus all of lower priorities. If not, SCAL is instructed to release incoming traffic for that priority however, if none of higher priority is currently held.

The invention helps preventing traffic congestion in communications networks, using fixed-size data packet switches, that would otherwise occur when a high level of multicast and broadcast traffic has to be supported at network nodes.

## Brief Description of the Drawings

**Figure 1** shows the type of switches that may better take advantage of the invention.

**Figure 2** explains how the invention generates a MultiCast Index (MCI) assessing the level of multicast traffic.

**Figure 3** discusses the problems solved by the invention and how MCI must be compared to a MultiCast Threshold, per priority i.e.: MCT (P), to carry out the invention.

**Figure 4** shows the steps of the method per the invention.

## Detailed Description of the Preferred Embodiment

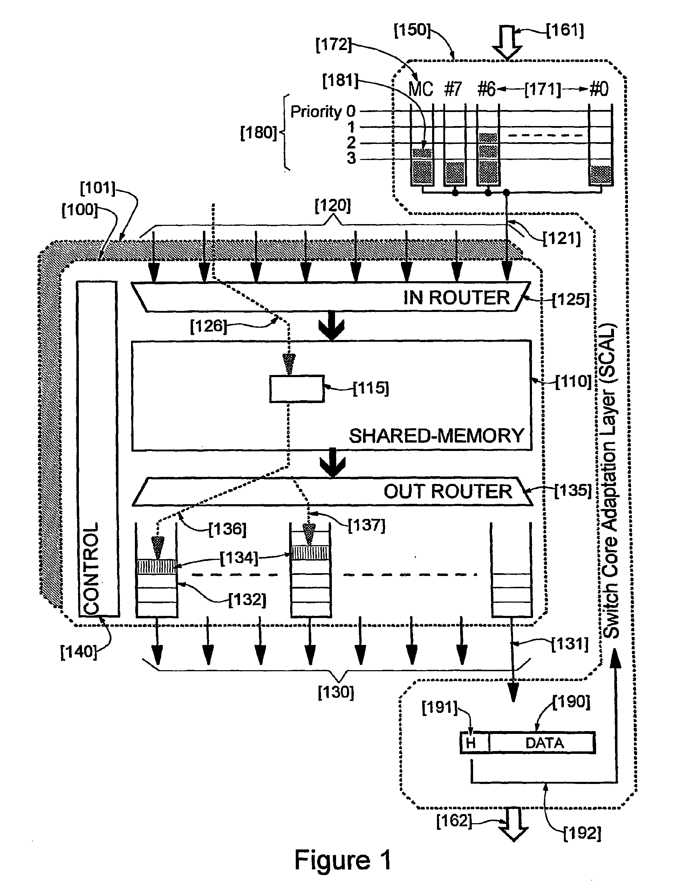

**Figure 1** illustrates the concept of a switch element [100] of the kind which can better take advantage of the invention. The switching element is thus a shared-memory [110] switch with input ports [120] and output ports [130], this particular example featuring a 8-port switch element.

It is worth mentioning here that, in general, multiple such switching elements may have to be used [100, 101]. In practice, they may have to be combined in various expansion modes so as to increase the number of ports, the port speed, and/or the overall switch performance thus, allowing to implement a switch fabric able to meet the requirements of a particular application. Because the invention can be carried out as well from a single or multiple switch elements such as [100], it is then assumed in the following description that, for the sake of simplicity, a single switch element is used. If several of them must actually be combined, their design is assumed to be such that they behave as a single entity equivalent to a single switch element however, having e.g., more ports at higher speed.

Associated with the ports, there are input routers [125] and output routers [135]. At the input side, data packets are then routed [126] from the input ports to buffers within the shared-memory and output routers are used to read packets out from it e.g., [136] towards the output ports. Therefore, when a packet is received, it is allocated a free buffer [115] by the switch element control section [140]. A routing vector, that specifies the list of switching elements and their corresponding port identifiers in each switching element, is then appended to the packets. This way of doing is referred to, in the switch fabric, as source routing since the routing vector is determined by the initial switching element in the switch fabric using routing tables at the switch. After a packet is received, the control logic [140] analyzes the current routing vector and places the address of the packet buffer temporarily holding it [115], into an output queue such as [132]. Hence, knowing the packet buffer addresses, output queues like [132] can read out the corresponding packets from the shared memory, in the order they have been queued by the control section, so they eventually exit switch element [100] through the corresponding output ports [130].

The multicast and broadcast operations are performed using special routing tags that do not correspond to any port identifiers. To perform a multicast, the routing tag of the packet corresponds to a list of output ports. A single copy of the packet is kept in the packet buffer [115] of the shared memory and the address of the buffer is _copied to all corresponding output queues e.g., in two output queues [134]. Thus, the data packet needs only be stored once, while this is the pointer to where the data is stored in shared memory which is replicated instead. This scheme, referred to as 'replication at sending' (RAS), provides the ultimate performance with minimum memory resources allowing that the only copy of the packet be read out twice [136, 137], so as it exits through the two corresponding output ports in this particular example of multicast.

Also, as already briefly discussed in the background section, a switch fabric has to interface communication lines through a port to line adaptation layer here after denominated SCAL for Switch Core Adaptation Layer. There is one such SCAL [150] per pair of IN and OUT switch ports. The chief purpose of it, among other things, is to adapt the generally complex protocols used to transport data on the IN [161] and OUT [162] paths of a communication line e.g., an optical fiber, to the IN [121] and OUT [131] ports of the switch. Also, another key role of SCAL, is to help switching elements [100, 101] to indeed implement a lossless switching function. Then, to help preventing traffic congestion and to avoid any packet discarding the input leg of SCAL [150] is equipped with more buffering on top of what exists in switch i.e., the shared memory [110]. Irrespective of the way it is actually implemented this extra buffering is organized as a series of queues: one per output port [171] plus one for the multicast traffic [172]. The purpose of those queues is to temporarily hold, when necessary, the incoming traffic before it enters the switch. So, there is a common queue [172] for all the traffic that must exit the switch through more than one output port i.e., the multicast traffic. For the traffic destined for a single output port, the unicast traffic, there is one dedicated queue per port [171].

Moreover, a switching function of the kind shown in Figure 1 has to manage classes of traffic on the basis of priorities, so as to offer a differentiated type of service to the end users. As an example (more or fewer levels could be considered as well) four priority levels (0-3) are assumed in the description of the invention. Level O has, in this description, the highest priority and corresponding traffic must be expedited in case of congestion versus traffic of lower priorities namely, level 1, level 2 and level 3. Also, if some packet discarding must take place, as a last resort to prevent congestion, this will start with priority 3 traffic. Therefore, associated to the various queues used either within the switch element e.g., [132] or in the SCAL's there are watermarks [180], one per priority level. When a queue is filling up and some watermarks crossed e.g., [181] this serves as triggers for all the appropriate actions that are further discussed in the rest of the description. Watermarks are also associated to the filling of the switch shared memory [110]. In this latter case the actions that are taken, are global i.e., involves all SCAL's which must all hold e.g., the switch input traffic of priority 3 if the corresponding priority watermark of shared memory is crossed. On the contrary, if this is the priority 3 watermark of output queue [132] which is crossed the actions are more selective. Although they still involve all SCAL's only the traffic for that port [132] has to be held in the corresponding SCAL input queues.

Finally, the mechanism by which all parties are made aware of the various status of queues and occupancy of the shared-memory is largely dependent on the particular design of the switch elements composing a switch fabric. Although this is beyond the scope of the invention, so many other alternate methods could be used while practicing the invention, a preferred way of operating consists in carrying this type of information in the header part (overhead) [191] of the packets [190] leaving or entering the switch respectively through an output port e.g., [131] or an input port e.g., [121]. Especially, what is occurring within the switch element [100] can be reported over the traffic exiting e.g., port [131] and passed back [192] to the input leg of the SCAL. This latter is kept updated on the internal status of the switch thus, is always aware of the filling status of all port output queues such as [132]. Hence, each SCAL can take appropriate actions like holding temporarily the traffic destined for a busy output port. Similarly, controlling information can be carried over the data packets entering the switch through input port [121] so that this information is possibly broadcast to all other SCAL's over traffic exiting all switch ports [130].

This scheme, referred to as in-band controlling, which not only utilizes the switch bandwidth to transport the end-user data but also the switch controlling information, permits to easily spread this latter to all parties that need to receive it. This scheme scales up very well when switch elements must be added [100, 101] to expand the switch performances and characteristics. Especially, this scheme neither require that specific signal I/0's be devoted to the exchange of control information between the various components since it is transported like and with the data, nor it assumes there is a central control section in charge of monitoring the individual switch elements.

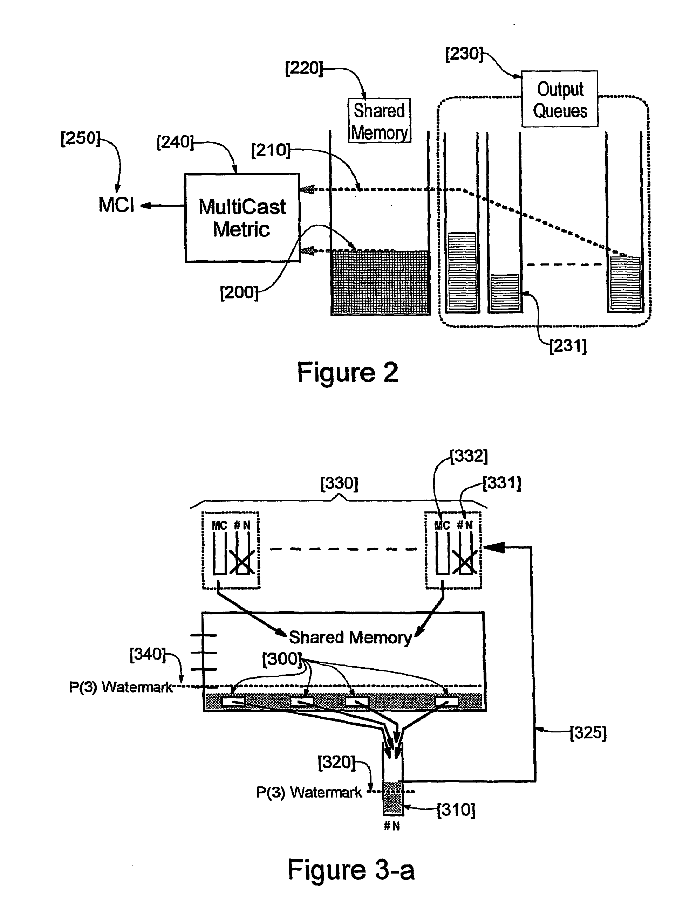

**Figure 2** depicts the metric used to assess the intensity of the multicast occurring at any given instant within the switch. Because of the structure of the switch, described in Figure 1, a simple metric can be used which consists in comparing the actual filling [200] of the shared memory [220] to the sum of what has been enqueued [210] by the control section, in the port output queues [230] under the form of buffer pointers e.g., [231] (and which have not been forwarded yet). The number of buffers that are currently allocated in the shared memory, for temporarily holding the switched traffic, to the total number of buffer pointers that are still in the port output queues are thus compared. Obviously, if the two numbers are the same that means that no multicast is required at this moment since there is a one to one correspondence between each temporarily held packet and its single destination port. However, as soon as some packets must exit switch through multiple output ports, because it has been determined that multicast is required on some of the entering traffic, this immediately results in the replication of buffer pointers in more than one output queue. Therefore, the sum of buffer pointers is becoming higher than the number of allocated buffers in the shared memory thereby, measuring the intensity of the multicast. A Multi Cast Index (MCI) [250] based on such a metric must be generated [240] so that appropriate actions can be taken on a traffic priority basis. Several ways of generating this metric can be considered. As an example, the ratio of the total number of buffer pointers present in the output queues over the number of allocated buffers in the shared memory can be calculated so that the result is a MCI index number equal to or larger than 1. The higher it is the more intense is the level of multicast with an upper possible value which is implementation dependent (it depends on the respective sizes of the shared memory versus the sum of output queue sizes). This way of practicing the invention assumes that a division must be performed which would require a sophisticated piece of hardware to carry it at very high speed. A more simple approach consists in calculating the difference instead. This requires a simple adder. Hence, an index value of zero is returned when no multicast is performed and, like in the previous case, the higher the index value the more intense is the level of multicast with an upper bound which is implementation dependent too. Therefore, in a preferred embodiment of the invention the simple metric used to assess the multicast intensity is:

$$MCI = \sum\nolimits^{N} OQPP - SMAPB$$

with:

　　MCI = MultiCast Index
　　OQPP = Output Queue Packet Pointers (over N ports)
　　SMAPB = Shared Memory Allocated Packet Buffers

However, it must be understood that the choice of this simple multicast index, in a preferred embodiment of the invention, does not preclude whatsoever the use of alternate more sophisticated methods for generating an index representative of the intensity of the multicast.

As briefly discussed here above, the ratio of the relative filling of the shared memory versus the sum of what is queued in the output port queues or any alternate solution to measure it could be preferred in a particular implementation without departing from the spirit of the invention though.

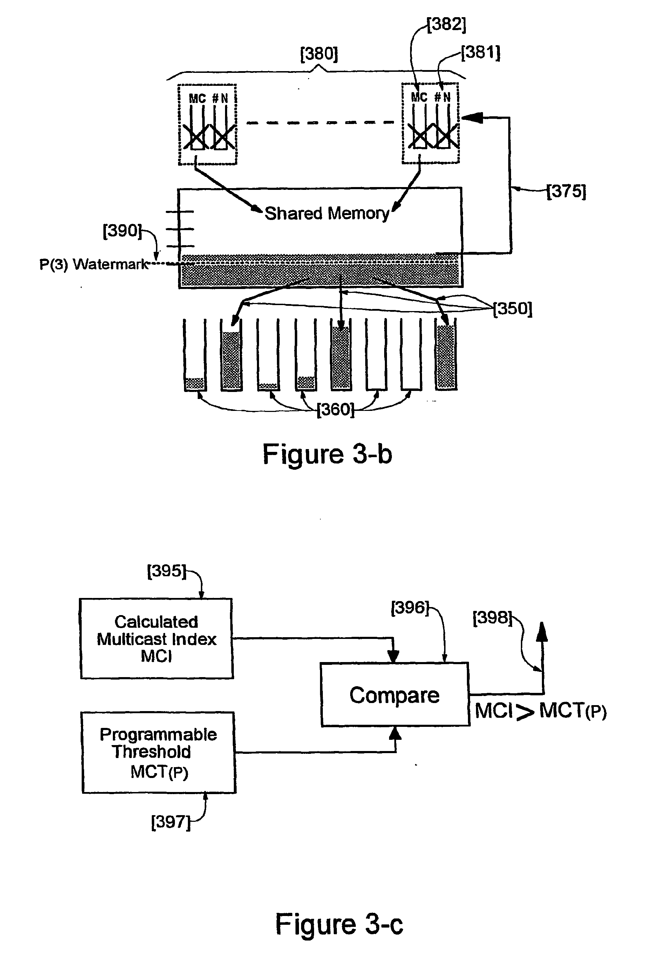

**Figure 3** briefly discusses two situations typical of the state of the art in which an unconstrained level of multicast creates problems. This helps to better understand the advantages of the invention further discussed in Figure 3-c.

**Figure 3-a** is thus an example of a problem that arises when the shared memory is holding, at some point of time, many multicast packets [300] e.g., of priority 3, and destined for a same output port [310]. Then, because corresponding output queue is filling up the priority 3 watermark [320] is rapidly crossed. Hence, through the mechanism previously discussed, allowing to spread the switch control information to all switch components [325], all SCAL input legs [330] are soon becoming aware of the fact that a given output port queue [310] is building up. As a consequence, the received traffic in the corresponding unicast input queues e.g., [331], for priority 3 in this example, is held in every SCAL unicast queue for that port. However, because SCAL input multicast queues e.g., [332], are not dedicated to a particular port they are NOT instructed to hold their traffic for that priority while the shared memory watermark of priority 3 [340] is not crossed. This leads to a great deal of unfairness between multicast and unicast traffic since, only this latter is hold while the reason for which a particular output queue is building up may be mostly, if not solely, the result of the former. Therefore, in these cases, stopping the unicast traffic may not even significantly help solving the problem.

**Figure 3-b** depicts another example of the difficulties encountered if the level of multicast is uncontrolled. when multicast packets are accepted in the shared memory and if they are mostly destined for one or more output ports [350], so that multicast traffic is temporarily biased to some output ports (while, ideally, it should be equally spread over all output ports) then, shared memory tends to built up rapidly and watermark of corresponding priority crossed [390] e.g., priority 3. Hence, as soon as priority 3 watermark of shared memory is indeed crossed [375] all the traffic for that priority is hold in all unicast and multicast queues e.g., [381, 382]], of every SCAL [380]. This occurs even though the other output port queues [360] are not busy and could perfectly handle traffic for that priority. This also creates unfairness since all the traffic of certain priorities (i.e., of level 3 in this example or of levels 2 and 3 if priority 2 watermark was crossed etc..) which is unconditionally held e.g., [382] irrespective of the output port destinations while some of them may just be idle or lightly loaded [360] for that priority(ies) thus, resulting in an under-utilization of the switch resources.

**Figure 3-c** explains how the invention is carried out. The multicast index MCI [395], calculated as explained in Figure 2, is compared [396] to a programmable multicast threshold [397] per priority: MCT(p). User of the switch has thus the freedom of customizing the behaving for its own particular application. Then, the invention enables the possibility of controlling the multicast queues of the SCAL's [330, 380] on top of all other mechanisms normally used to control the flows of data between the IN and OUT ports. More specifically, if the level of multicast is below or equal to the threshold thus set by the user nothing specific is undertaken as far as multicast traffic is concerned. However, if set threshold is crossed i.e., MCI becomes larger than MCT(p) [398] then, this is reported to all SCAL input legs [330, 380] in order to hold traffic of the multicast queues [332, 382]. This is done irrespective of the actual filling of the shared memory so as to prevent the problem discussed with Figure-2a from ever occurring (multicast traffic was still permitted to flow in even though it was the main contributor to the congestion observed in one, or more, output port queue [310]). In other words, the SCAL multicast queues have their own independent control based on the overall actual level of multicast observed at a given instant in the switch so as, when in the configuration of figure 3-a, multicast traffic is indeed stopped. Hence, this mechanism also allows to get rid of the problem discussed in figure 3-b since the decision of holding the multicast queues is no longer based on the filling of the shared memory. Thus, SCAL multicast queues may still be authorized to send traffic at a certain priority level, so that the not-so-busy ports [360] get a chance to handle it, as long as the multicast index remains below the corresponding threshold.

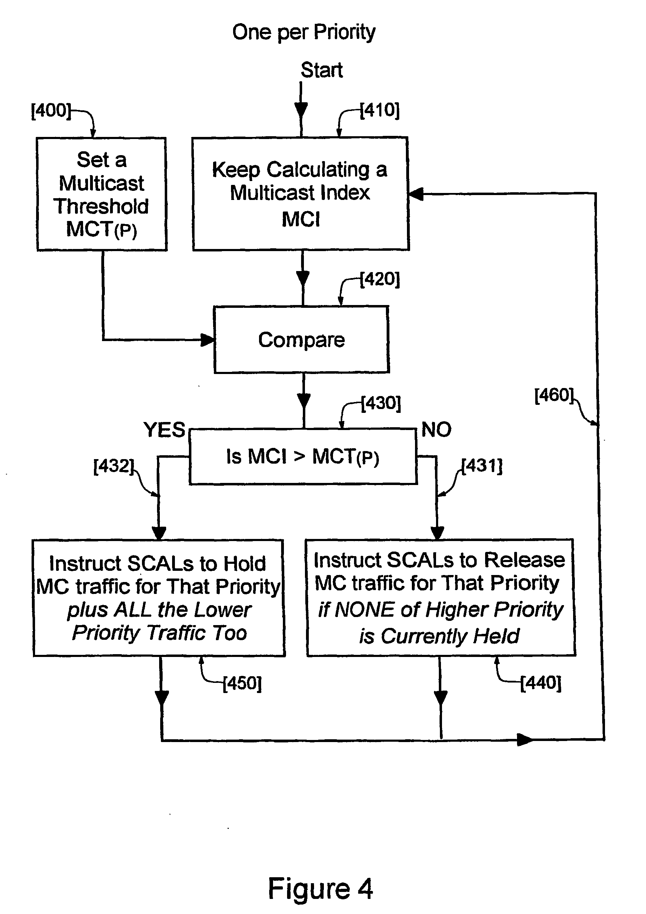

**Figure 4** depicts the steps of the method per the invention. Hence, multicast index i.e., MCI [400], is kept calculated within switch. Prior to this, once for all, or regularly updated, depending on the application, a multicast threshold $MCT_{(P)}$ [410] per priority is set. This latter is compared [420] to MCI. If MCI is below or equal to $MCT_{(P)}$ [431] so answer to step [430] is negative, SCALs are instructed to release [440] a possible previously hold state corresponding to that priority however, if no traffic of higher priority is currently already held though. If answer to step [430] is positive i.e., MCI is larger [432], SCALs are instructed [450] to hold traffic of current priority (or to confirm a previous hold) plus all traffic of lower priorities, if any, too. After which method keeps cycling [460] thus, resuming at step [400] while switch is up and running. This is performed sequentially or in parallel to cover all priority classes of traffic. Multicast threshold [400] are set so that the higher the priority the larger the threshold in order that lower priority classes of traffic be held first.

Although explained in the context of a switch element [100, 101] of the kind shown in Figure 1 it must be understood by those skilled in the art that the invention could be practiced in a different environment as well. Especially, the invention also applies in the output leg of a SCAL function [150] having memory to further hold the outgoing traffic in the case where more than one communication line [162] is handled from a single SCAL hence, implementing sub-ports. In this case, because multicast must be carried out down to each subport, the same kind of problems as described at length in previous figures may now occur in the SCAL output leg alone necessitating the implementation of the invention to get rid of them.

**Claims**

1. A method for assessing a level of multicast traffic in a data switch [100, 101], said data switch aimed at steering fixed-size data packets [190] from input ports [120] to output ports [130], said switch comprising a shared memory [110] for temporarily holding a single copy of said fixed-size data packets, said shared-memory comprising buffers [115] for storing said fixed-size data packets, said output ports each equipped with an output port queue [132], each said output port queue containing pointers [134] to those of said buffers holding said data packets due to leave said data switch through said output port; said method comprising the steps of:

   counting [200] a total number of said buffers [115] of said shared-memory [110] currently holding a said data packet due to leave said data switch;
   counting [210], over all said output port queues [230], a total number of said pointers [231] to said buffers;
   deriving a metric [240] of said level of multicast traffic.

2. The method according to claim 1 wherein said metric for said level of multicast traffic consists in calculating a MultiCast Index (MCI) [250] which is the difference between said total number of said buffers of said shared-memory currently holding a said data packet and said total number of said pointers to said buffers present in all said output port queues.

3. The method according to claim 1 wherein said metric for said level of multicast traffic consists in calculating a MultiCast Index (MCI) [250] which is the ratio of said total number of said buffers of said shared-memory currently holding a said data packet over said total number of said pointers to said buffers present in all said output port queues.

4. The method according to any one of the previous claims wherein said data switch is used together with a Switch Core Adaptation Layer (SCAL) [150], said SCAL including a multicast input queue [172] aimed at holding an incoming data traffic to be steered through said data switch and destined for more than one of said output ports [130], said data switch and said SCAL handling together said incoming data traffic on the basis of a set of priority classes (P) [180], said method comprising, for each said priority class, the further step of:

prior to start receiving said incoming data traffic; setting [400], a multicast threshold MCT(P) associated to said multicast input queue [172]; while receiving said incoming data traffic;

optionally updating said multicast threshold MCT(P).

**5.** The method according to claim 4 including the further steps of:

keep calculating a said MCI [410];
for each said priority class (P) [180], in each said SCAL [150];
comparing [420] said MCI to said MCT(P) to determine [430] whether current calculated said MCI is larger than said MCT(P) or not;
if larger [432]:

instructing [450] said SCAL to hold in said multicast input queue [172] said incoming traffic for that priority
plus all of lower priorities;

if not [431] :

instructing [440] said SCAL to release said incoming traffic for that priority however, if none of higher
priority is currently held;

keep cycling [460] through all here above steps while receiving incoming traffic.

**6.** A system for controlling the multicast traffic in a switch, comprising means adapted for carrying out the method according to any one of the previous claims.

**7.** A computer-like readable medium having encoded thereon a computer program comprising instructions for carrying out the method according to any one of the claims 1 to 5.

**Patentansprüche**

**1.** Verfahren zum Feststellen eines Aufkommens an Mehrpunktverbindungs-Datenverkehr (multicast traffic) in einer Datenvermittlungsstelle (100, 101), wobei der Zweck der Datenvermittlungsstelle darin besteht, Datenpakete (190) mit feststehender Größe von Eingangsanschlüssen (120) an Ausgangsanschlüsse (130) zu leiten, wobei die Vermittlungsstelle einen gemeinsam genutzten Speicher (110) zum zeitweiligen Speichern einer einzelnen Kopie der Datenpakete mit feststehender Größe umfasst, wobei der gemeinsam genutzte Speicher Puffer (115) zum Speichern der Datenpakete mit feststehender Größe umfasst, wobei die Ausgangsanschlüsse jeweils mit einer Ausgangsanschluss-Warteschlange (132) ausgestattet sind, wobei jede solche Ausgangsanschluss-Warteschlange Zeiger (134) auf jene der Puffer enthält, die die Datenpakete zwischenspeichern, die die Datenvermittlungsstelle durch den Ausgangsanschluss verlassen sollen; wobei das Verfahren die folgenden Schritte umfasst:

Zählen (200) einer Gesamtanzahl der Puffer (115) des gemeinsam genutzten Speichers (110), die gegenwärtig ein Datenpaket zwischenspeichern, das die Datenvermittlungsstelle verlassen soll;
Zählen (210) einer Gesamtanzahl der Zeiger (231) auf die Puffer über alle Ausgangsanschluss-Warteschlangen (230);
Ableiten einer Maßzahl (240) des Aufkommens an Mehrpunktverbindungs-Datenverkehr.

**2.** Verfahren nach Anspruch 1, wobei sich die Maßzahl für das Aufkommen an Mehrpunktverbindungs-Datenverkehr aus der Berechnung eines Mehrpunktverbindungsindexes (MultiCast Index - MCI) (250) ergibt, der die Differenz zwischen der Gesamtanzahl der Puffer des gemeinsam genutzten Speichers, die gegenwärtig ein Datenpaket zwischenspeichern, und der Gesamtanzahl der in allen Ausgangsanschluss-Warteschlangen vorhandenen Zeiger auf die Puffer ist.

**3.** Verfahren nach Anspruch 1, wobei sich die Maßzahl für das Aufkommen an Mehrpunktverbindungs-Datenverkehr aus der Berechnung eines Mehrpunktverbindungsindexes (MCI) (250) ergibt, der das Verhältnis der Gesamtanzahl von Puffern des gemeinsam genutzten Speichers, die gegenwärtig ein Datenpaket zwischenspeichern, zu der Gesamtanzahl der in allen Ausgangsanschluss-Warteschlangen vorhandenen Zeiger auf die Puffer ist.

**4.** Verfahren nach irgendeinem der vorhergehenden Ansprüche, wobei die Datenvermittlungsstelle zusammen mit einer Anpassungsschicht für den Vermittlungsstellenkern (Switch Core Adaptation Layer - SCAL) (150) verwendet wird, wobei die SCAL eine Mehrpunktverbindungs- Eingangswarteschlange (172) aufweist, deren Zweck das Zwischenspeichern eines eingehenden Datenverkehrs ist, der durch die Datenvermittlungsstelle geleitet werden muss und für mehr als einen der Ausgangsanschlüsse (130) bestimmt ist, wobei die Datenvermittlungsstelle und die SCAL den eingehenden Datenverkehr auf der Grundlage eines Satzes von Prioritätskategorien (priority classes - P) (180) gemeinsam verwalten, wobei das Verfahren für jede Prioritätskategorie den folgenden weiteren Schritt umfasst:

vor dem Beginn des Empfangens des eingehenden Datenverkehrs; Einrichten (400) eines Mehrpunktverbindungs-Schwellenwertes MCT (P), der der Mehrpunktverbindungs-Eingangswarteschlange (172) zugeordnet wird;
während des Empfangens des eingehenden Datenverkehrs; wahlweise Aktualisieren des Mehrpunktverbindungs-Schwellenwertes MCT (P).

**5.** Verfahren nach Anspruch 4, das die folgenden weiteren Schritte umfasst:

fortlaufendes Berechnen eines MCI (410);
für jede Prioritätskategorie (P) (180) in jeder SCAL (150); Vergleichen (420) des MCI mit dem MCT(P), um festzustellen (430), ob der aktuell berechnete MCI größer als MCT(P) ist;
falls größer (432):

Anweisen (450) der SCAL, den eingehenden Datenverkehr für diese Priorität zuzüglich demjenigen mit geringeren Prioritäten in der Mehrpunktverbindungs-Eingangswarteschlange (172) zwischenzuspeichern;

falls nicht (431):

Anweisen (440) der SCAL, den eingehenden Datenverkehr für diese Priorität freizugeben, falls derzeit kein Datenverkehr mit höherer Priorität zwischengespeichert wird;

fortlaufendes Durchlaufen (460) aller oben genannten Schritte während des Empfangens von eingehendem Datenverkehr.

**6.** System zum Steuern des Mehrpunktverbindungs-Datenverkehrs in einer Vermittlungsstelle, das ein Mittel umfasst, das zum Ausführen des Verfahrens nach irgendeinem der vorhergehenden Ansprüche geeignet ist.

**7.** Computerähnliches lesbares Medium mit darauf codiertem Computerprogramm, das Befehle zum Ausführen des Verfahrens nach irgendeinem der Ansprüche 1 bis 5 umfasst.

**Revendications**

**1.** Un procédé pour établir un niveau de trafic multidiffusion dans un commutateur de données (100, 101), ledit commutateur de données visant à guider des paquets de données (190) de taille fixe, depuis des ports d'entrée (120) à des ports de sortie (130), ledit commutateur comprenant une mémoire partagée (110), pour conserver temporairement une copie unique desdits paquets de données à taille fixe, ladite mémoire partagée comprenant des tampons (115), pour stocker lesdits paquets de données à taille fixe, lesdits ports de sortie étant chacun équipés d'une file d'attente de ports de sortie (132), chaque dite file d'attente de ports de sortie contenant des pointeurs (134), pointant à ceux desdits tampons contenant lesdits paquets de données devant quitter ledit commutateur de données par ledit port de sortie ; ledit procédé comprenant les étapes consistant à :

compter (210) un nombre total desdits tampons (115) de ladite mémoire partagée (110) détenant actuellement un dit paquet de données, devant quitter ledit commutateur de données ;
compter (200), sur la totalité desdites files d'attente de ports de sortie (230), un nombre total desdits pointeurs (231) pointant auxdits tampons ;
dériver une métrique (240) dudit niveau de trafic multidiffusion.

**2.** Le procédé selon la revendication 1, dans lequel ladite métrique, pour ledit niveau de trafic multidiffusion, consiste à calculer un Indice Multidiffusion (MCI) 250, qui soit la différence entre ledit nombre total desdits tampons de ladite mémoire partagée détenant actuellement un dit paquet de données et ledit nombre total desdits pointeurs pointant auxdits tampons présents dans la totalité desdites files d'attente de ports de sortie.

**3.** Le procédé selon la revendication 1, dans lequel ladite métrique, pour ledit niveau de trafic multidiffusion, consiste à calculer un Indice Multidiffusion (MCI) 250, qui soit le rapport entre ledit nombre total desdits tampons de ladite mémoire partagée détenant actuellement un dit paquet de données et ledit nombre total desdits pointeurs pointant auxdits tampons présents dans la totalité desdites files d'attente de ports de sortie.

**4.** Le procédé selon l'une quelconque des revendications précédentes, dans lequel ledit commutateur de données est utilisé, conjointement avec une Couche d'Adaptation au Noyau de Commutation (SCAL) (150), ladite SCAL comprenant une file d'attente d'entrées de multidiffusion (172), visant à contenir un trafic de données entrant, devant être passé à travers ledit commutateur de données et destiné à plus d'un desdits ports de sortie (130), ledit commutateur de données et ladite SCAL traitant conjointement ledit trafic de données entrant, sur la base d'un jeu de classes de priorité (P) (180), ledit procédé comprenant, pour chaque dite classe de priorité, l'étape supplémentaire consistant à :

avant de commencer à recevoir ledit trafic de données entrant ;
fixer (400) un seuil de multidiffusion MCT (P) associé à ladite file d'attente d'entrées de multidiffusion (172) ;
tout en recevant ledit trafic de données entrant ;
mettre à jour, de façon optionnelle, ledit seuil de multidiffusion MCT (P).

5. Le procédé selon la revendication 4, comprenant les étapes supplémentaires, consistant à :

continuer à calculer un dit MCI (410) ;
pour chaque clase de priorité (P) (180), dans chaque dit SCAL (150) ;
comparer (420) ledit MCI audit MCT (P), pour déterminer (430) si ledit MCI calculé actuel est supérieur audit MCT (P) ou non ;
s'il est supérieur (432) :

dicter (450) audit SCAL de conserver, dans ladite file d'attente d'entrées multidiffusion (172), ledit trafic entrant pour cette priorité, plus la totalité des priorités inférieures ;

s'il ne l'est pas (431) :

dicter (440) à ladite SCAL de libérer ledit trafic entrant pour cette priorité, cependant, si aucune priorité supérieure n'est actuellement détenue ;

continuer l'exécution cyclique (460) de la totalité des étapes indiquées ci-dessus, tout en recevant le trafic entrant.

6. Un système, pour réguler le trafic multidiffusion dans un commutateur, comprenant des moyens, adaptés pour mettre en oeuvre le procédé selon l'une quelconque des revendications précédentes.

7. Un support lisible, analogue à un ordinateur, comprenant sur lui, codé, un programme informatique, comprenant des instructions pour mettre en oeuvre le procédé selon l'une quelconque des revendications 1 à 5.

Figure 1

[220]
[230]

Output
Queues

[250]
[240]
[210]

MCI ← MultiCast
Metric

Shared
Memory

[200]

[231]

## Figure 2

[332]
[330]
[331]

MC #N
MC #N

Shared Memory

[340]
[300]

P(3) Watermark

[325]

[320]

P(3) Watermark

[310]

#N

## Figure 3-a

[382]

[380] [381]

[375]

MC # N          MC # N

Shared Memory

[390]

P(3) Watermark

[350]

[360]

## Figure 3-b

[395]

Calculated
Multicast Index
MCI

[396]     [398]

Compare

MCI > MCT(P)

Programmable
Threshold
MCT(P)

[397]

## Figure 3-c

One per Priority

Start

[400]

Set a
Multicast
Threshold
MCT(P)

[410]

Keep Calculating a
Multicast Index
MCI

[420]

Compare

[430]

YES

NO

Is MCI > MCT(P)

[432]

[431]

[460]

Instruct SCALs to Hold
MC traffic for That Priority
*plus ALL the Lower
Priority Traffic Too*

Instruct SCALs to Release
MC traffic for That Priority
*if NONE of Higher Priority
is Currently Held*

[450]

[440]

Figure 4

**EP 1 317 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0948169 A

**Non-patent literature cited in the description**

- IEEE Journal on selected areas in communications. IEEE inc, 01 April 1997, vol. 15, 473-486